# EUROPEAN PATENT APPLICATION

(11) **EP 1 811 282 A1**
(43) Date of publication of application: **25.07.2007**
(21) Application number: 06405019.8
(22) Date of filing: 20.01.2006
(51) Int. Cl.: G01N 17/00, F22B 35/00, F23G 5/50

(54) **Monitoring a degradation of steam generator boiler tubes**

(71) Applicant: ABB Technology AG, 8050 Zurich (CH)
(72) Inventor: Weisenstein, Wolfgang, 5507 Mellingen (CH); Milanovic, Raiko, 69121 Heidelberg (DE)
(74) Representative: ABB Patent Attorneys

(57) **Abstract**

The present invention is concerned with an on-line degradation monitoring for boiler tubes (15a,15b) in large combustion facilities, in particular waste incineration plants. The degradation of the tubes, in particular corrosion or caking, is determined in a more or less continuous manner while the combustion facility is operating, and thus not restricted to optical inspection during downtimes. A rate or accumulated degradation can be related to an operation mode of the facility. Appropriate degradation sensors (4) are arranged outside of a flue gas tract (14) where the boiler tubes are exposed to noxious flue gases from the combustion process, and receive ultrasonic signals from a space or volume within the flue gas tract (14). A test tube (40) is provided exclusively for the monitoring of the degradation progress and introduced into the flue gas tract (14) at a particularly corrosion exposed location.

## Description

### FIELD OF THE INVENTION

The invention relates to the operation of large combustion facilities, and more particularly to the monitoring of a degradation of the boiler tubes of the facilities' steam generators.

### BACKGROUND OF THE INVENTION

Steam generators or boilers in large combustion facilities are facing extreme environmental conditions caused by the temperature and chemical composition of the flue or exhaust gases to which they are exposed. While the flue gases of power plants fired with natural gas are of a somewhat lesser concern, coal or crude-oil fired power plants produce flue gases of varying composition, comprising, among others, large amounts of aggressive sulphur components. So-called waste-to-energy plants are combustion facilities that burn the waste to ashes and use the combustion heat to convert liquid water into steam, e.g. for district heating, and/or electricity generation. Accordingly, waste incineration plants are prime victims of boiler tube degradation, as the composition of their flue gases depends heavily on the composition of the waste burned and thus is as unpredictable as the latter. In any case, high amounts of fluorine, chlorine, bromine and iodine, which are contained in some types of plastics or electronic residuals in ordinary municipal waste, together with high combustion temperatures can lead to a high corrosion rate at the boiler tubes of the steam generators. In extreme cases the reduction in boiler tube wall thickness reaches 0.5 mm per annum. Additionally, high amounts of dust particles may be present in the flue gases, which occasionally initiates caking or fouling as well as soot deposition on the tubes, i.e. a formation of a deposit on the surface of the tubes constraining the heat transfer and, as a consequence, the boiler efficiency. Corrosion and caking in turn require frequent maintenance of the boiler, without which both lifetime and economic efficiency of the whole plant would be impaired.

Steam generator manufacturers try to avoid the disadvantages mentioned by selecting carefully the materials used for the design of the specific boiler tubes which are in direct contact with the aggressive flue gases. However, due to regional and seasonal variations in the composition of municipal waste it is almost impossible to select a material that can withstand the full range of corrosive components and/or effects. This gives rise to the phenomena that a tube material which was successful in a first waste incineration plant fails completely in a second one. The use of ceramic barrier coatings does not provide a sustainable solution since the boiler tubes are hammered periodically in an attempt to avoid caking on the tubes, whereby such mechanical means are very likely to destroy any ceramic coating.

The most significant control parameters defining an operation or combustion mode in waste incineration plants are the mass flows of primary and secondary combustion air, the air temperature, the amount of returned flue gas, the amount of waste or fuel fed and the transportation speed or the stoking speed of a reciprocating grate. An adaptation of these parameters typically occurs on a time scale of days or weeks, and may result in a different position of the flame on the grate and thus to a different flow regime and temperature distribution of the flue gases in the furnace or funnel, i.e. the space above the grate.

Using state of the art measurement techniques the plant operating companies can only use periodic downtimes to measure the actual wall thickness of the boiler tubes and to compare the results with results from earlier measurements. The recording and processing of measurements over a long period of time can nevertheless reveal a decrease tendency, which can be used to prepare appropriate maintenance activity. Since such downtimes are scheduled at most twice a year, inspections can usually be performed at best every six months, and a direct correlation of the degradation due to corrosion and/or caking and the abovementioned operation or combustion mode of the plant is impractical.

### DESCRIPTION OF THE INVENTION

It is therefore an objective of the invention to correlate the degradation of the boiler tubes of a steam generator in a large combustion facility to an operation mode of the facility. This objective is achieved by a method of and system for degradation monitoring according to the claims 1 and 6, respectively. Further preferred embodiments are evident from the dependent patent claims.

According to the invention, an on-line degradation monitoring for boiler tubes is introduced, which allows determining the degradation or deterioration in a more or less continuous manner while the combustion facility is operating. The degradation evaluation is thus not restricted to optical inspection during downtimes, and a rate or accumulated degradation can be related to past or present operation modes of the facility. Appropriate devices and measurement techniques are provided for introducing and receiving measurement signals into and from a space or volume within a flue gas tract where the boiler tubes are located and exposed to the destructive effects of the flue gases from the combustion process. Hence, environmental conditions are inspected right where they are affecting the boiler tubes.

In an advantageous embodiment of the invention, appropriate degradation sensors such as ultrasonic transducers are arranged outside of the flue gas channel guiding the destructive flue gases, and are themselves not exposed to the corrosive atmosphere.

In a preferred embodiment of the invention, an ultrasonic measurement technique is employed for inspecting the degradation of a boiler tube, taking advantage of the fact that both corrosion and caking relate to a build-up of additional interfaces or layers of different composition both reflecting incoming sound waves. Ultrasonic measurement is advantageous as compared to electrical measurements which rely on the fact that the corrosion relates to a changing geometry that can be accessed by determining a change in an electrical resistance. The latter requires extensive numerical correction of the measured resistance to account for the influence of the temperature, and does not allow detecting non-conductive surface deposits. Ultrasonic measurement is not impeded by such constraints. Ultrasonic flaw detection is a standard non-destructive-testing technique used in various industries for quality testing of flaws such as defective welding joints, cast inclusions and contraction cavities in bulk casts. According to the present invention, this technology can be adapted for monitoring of the corrosion condition of boiler tubes.

In a further preferred variant of the invention, a test tube preferably made of a single piece of metal without any welding joint is provided such that it extends into the space or volume within the flue gas tract where the boiler tubes are located. The test tube has no process relevance and is used just for the monitoring of the degradation progress and is advantageously mounted at a position in the flue gas tract where it is exposed to the same or even higher corrosive threats as the boiler tubes, i.e. upstream of the latter, close to the combustion zone.

### BRIEF DESCRIPTION OF THE DRAWINGS

The subject matter of the invention will be explained in more detail in the following text with reference to preferred exemplary embodiments which are illustrated in the attached drawings, which schematically show:
Fig. 1 the main components of a waste incineration plant;
Fig.2 a test tube with two dual element ultrasound transducers operating in a through transmission mode;
Fig.3 differing echo times as measured by two contact transducers operating in a pulse/echo mode configuration;
Fig.4 a single ultrasonic transducer with a waveguide.

The reference symbols used in the drawings, and their meanings, are listed in summary form in the list of reference symbols. In principle, identical parts are provided with the same reference symbols in the figures.

### DETAILED DESCRIPTION OF PREFERRED EMBODIMENTS

Industrial ultrasonic flaw detection generally utilizes frequencies between 500 kHz and 10 MHz and is a very common non-destructive material testing method. The propagation of sound waves through solid materials is used to detect hidden cracks, voids, porosity, and any other internal discontinuities in metals, plastics and ceramics. When highly directional sound energy travelling through a material encounters a boundary with another material, a portion of the energy will be reflected back and a portion will be transmitted through. In other words, high frequency sound waves reflect from grain boundaries and flaws in predictable ways, producing distinctive echo patterns that can be displayed and recorded. Ultrasonic testing is completely non-destructive and safe, and it is a well established test method in many manufacturing and process industries.

Typical transducers for industrial ultrasonic applications utilize an active element made of a piezoelectric ceramic, composite or polymer. When this element is excited by a high voltage electrical pulse, it vibrates across a specific spectrum of frequencies and generates a burst of sound waves. Conversely, when excited by an incoming sound wave, it generates an electrical pulse. Because sound energy at ultrasonic frequencies does not travel efficiently through gasses, a thin layer of coupling liquid or gel is usually used between the transducer and the test piece. Contact transducers are used in direct contact with the test piece. They introduce sound energy perpendicular to the surface, and are typically used for locating voids, porosities and cracks. Dual element transducers utilize separate transmitter and receiver elements in a single assembly and perform testing in a continuous pulse-echo mode. Another technique is termed through-transmission, where sound energy travels between the two transducer elements placed on opposite sides of the specimen. Pulse amplitude, shape, and damping can be controlled to optimize transducer performance, and receiver gain and bandwidth can be adjusted to optimize signal-to-noise ratios.

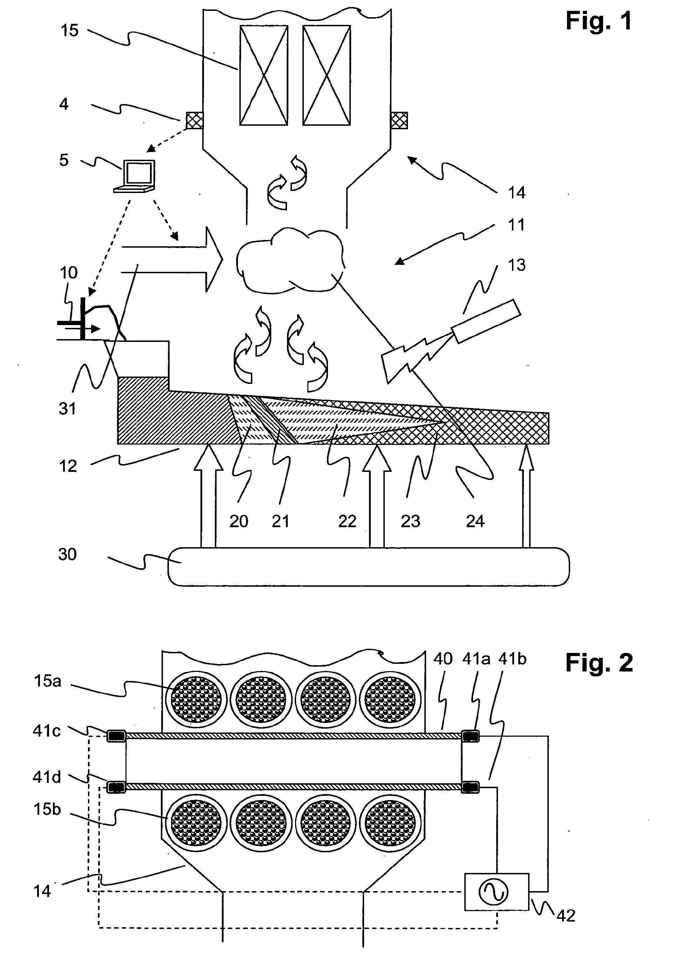

Fig.1 schematically shows a waste incineration plant with the following basic components. An input feed mechanism or actuator 10 introduces the municipal or industrial waste, garbage or other debris into a furnace 11 and places the former on a supported movable grate 12, thereby forming a waste bed. The grate 12 generally comprises some oppositely moving grate plates to spread and mix the waste and forward it along the grate 12. Auxiliary burners 13 may be provided in order to start or support the combustion processes. The combusted flue gases are collected in a flue gas tract or flue gas channel 14 upstream of the furnace 11 and guided to a boiler or steam generator 15. The waste incineration plant is further equipped with an appropriate set of degradation sensors 4 for detecting the progress of the degradation of the boiler 15. The measured data are processed online in a plant optimization software as part of a plant control system 5.

Without loss of generality, the incineration process is divided into four zones to be serially traversed by the waste: Drying zone 20, first combustion zone for pyrolysis and gasification/volatilization 21, residual zone for char oxidation or solid combustion 22, and ash treatment/sintering zone 23. These zones are actually not very well separated in the furnace and can overlap to a certain extent. A second combustion zone or flame zone 24, where the homogeneous gas phase combustion of the pyrolysis gases takes place, is identified above the waste bed. Primary air 30 is fed from below the grate in generally different amounts to the four abovementioned zones 20, 21, 22, 23. Secondary air 31 is fed above the grate to ensure complete combustion of the gasification and pyrolysis products in the second combustion zone 24. Due to the extreme environmental conditions in and above the second combustion zone 24, it is preferable to locate the sensors 4 not in the furnace itself, but rather at the exterior of the flue gas tract 14.

Fig.2 shows a longitudinal cross-section of a test tube 40 arranged in a flue gas tract 14 and surrounded by boiler tubes 15a, 15b oriented perpendicularly to the test tube. The test tube has no process relevance and is used exclusively for the monitoring of the degradation progress. To this end, the test tube has to be made of the same material as the boiler tubes, whereas its geometry, e.g. cross section (circular, elliptical, square) may be different from the one of the boiler tubes. In order to maintain a comparable temperature as in the boiler tubes, a flow of feed water through the test tube is maintained. This feed water is preferably taken from an independent water cycle that can be operated separately from the water/steam cycle flowing through the boiler. The test tube is mounted at a position in the flue gas tract where it is exposed to the same or even higher corrosive conditions as the boiler tubes. This ensures that the corrosion of the test tube is always comparable to the corrosion of the boiler tubes, and that in the worst case the test tube will be the first to fail.

The ultrasonic transducer elements or measurement heads 41 a, 41b, 41c and 41d are mounted to annular end planes of the test tube 40. To avoid thermal damage of the electronic equipment and to ensure reliable operation, the elements are mounted at a certain distance to the boiler and the flue gas tract 14. In the exemplary embodiment of Fig.2, the separate transmitter elements 41a, 41b and receiver elements 41c, 41d form two dual element transducers operating in a through transmission mode and controlled by ultrasonic controller 42. The latter comprises a wave/pulse generator, an amplifier and an oscilloscope or other device suitable for ultrasound detection and processing. In this configuration the signal intensity at the receiver elements can be processed to detect the increase of corrosion damages. The decrease of the intensity of the signal depends on a variety of factors, among which the geometric shape of the test tube is directly affected by the degradation effects that the present invention is attempting to identify.

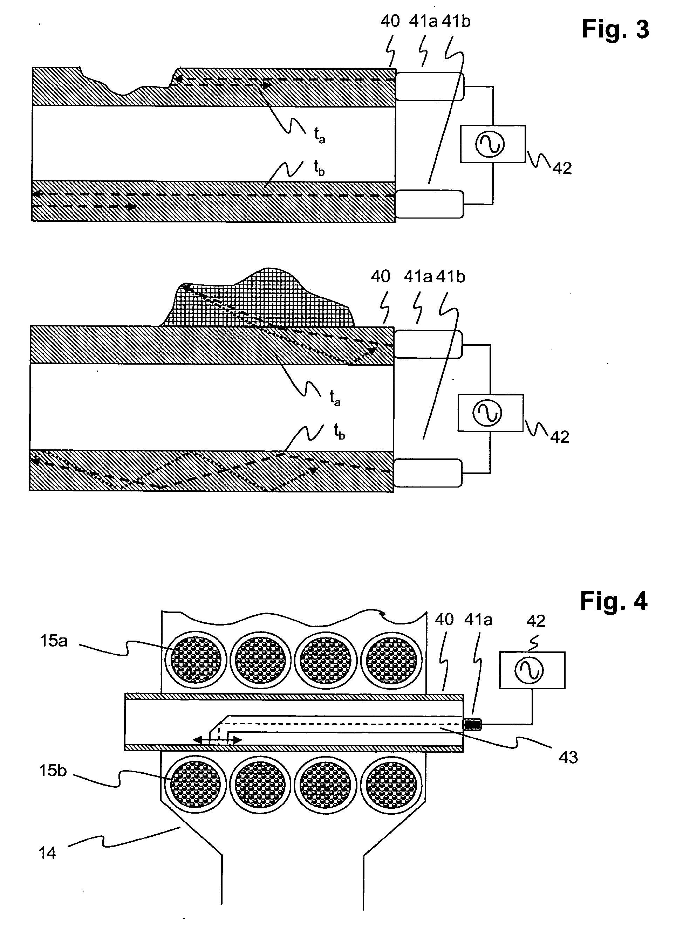

Fig.3 depicts an alternative embodiment with two contact transducers 41a, 41b operating in a pulse/echo mode. Ultrasonic testing basically being a comparative technique or relying on proper calibration, the most information can be derived from a comparison of two distinct ultrasound transmission times tₐ, t_{b}. If, as in Fig.3, t_{b} > tₐ as measured by the two transducers, this implies the existence of an additional sound reflective boundary encountered by the wave originating from and detected by transducer 41a. As depicted in the first drawing of Fig.3, such a boundary may be due to a local, i.e. longitudinally inhomogeneous and not cylindrically symmetrical corrosion effect in the form of a hole or depression in the outer tube wall. For the purpose of the present invention, ultrasound propagation may comprise multiple reflections in the test tube as depicted in the second picture of Fig.3, without impairing the usefulness of the procedure, but potentially requiring additional signal processing. In this case, a caking effect in the form of a deposit on the surface of the boiler tube clearly affects the ultrasound transmission time tₐ or gives rise to additional reflections.

Obviously, the two transducers 41a, 41b could also be attached to two distinct tubes. On the other hand, a single transducer element would have to rely on the occurrence of two different echoes resulting from a single burst of sound waves, i.e. an acoustically significant echo preceding an echo from the opposite end plane of the tube.

Fig.4 depicts an alternative way of mounting the ultrasonic measurement device 41a outside of the flue gas tract 14 at a distance from the hot area by means of a wave guide 43. This solution is advantageous if the most probable location of the corrosion can be identified in advance, e.g. by Computational Fluid Dynamics (CFD) simulation. The remote end of the wave guide is then placed right next to this location for an exclusive monitoring of the local wall thickness at the corresponding corrosion endangered spot using the pulse/echo principle. It is also possible to use a movable mount for the ultrasonic measurement device and the wave guide as indicated by the arrow in Fig.4. With such a setup the effective measurement area can be extended to monitor a larger range of locations or a plurality of corrosion endangered spots in the tube.

Another means for detection of corrosion by ultrasonic means is the use of a noncontacting initiation/reception device. A broadband ultrasonic wave is initiated by a laser pulse on a surface exciting a mechanical, i.e. acoustic, wave in the material. The wave propagates through the material until encountering a boundary. The reflected wave will cause a minute surface motion ("ripples") that are picked up by the laser, now operating in reception mode. The unaltered specimen will exhibit a distinctive wave pattern that is compared by interferometry to the latest measurement.

An optimization software, which correlates the signal modulation of the corrosion monitoring with the parameters of the different operation modes of the plant, allows to create and activate operation modes that reduce boiler corrosion as well as caking and soot deposition to a minimum. Thus, maintenance intervals can be adjusted to the actual condition of the plant, undesired downtimes can be avoided and the economic efficiency of the plant can be increased.

### LIST OF DESIGNATIONS

- 10: actuator
- 11: furnace
- 12: grate
- 13: auxiliary burner
- 14: flue gas tract
- 15: boiler
- 15a: boiler tube
- 20: drying zone
- 21: first combustion zone
- 22: residual zone
- 23: ash treatment zone
- 24: second combustion zone
- 30: primary air
- 31: secondary air
- 4: degradation sensor
- 40: test tube
- 41 a, b: transducer elements
- 42: sensor controller
- 43: wave guide
- 5: control system

## Claims

1. A method of monitoring a degradation of steam generator boiler tubes in large combustion facilities, wherein the boiler tubes (15a, 15b) are arranged in a flue gas tract (14) and exposed to flue gases from a combustion process, **characterized in that** the method comprises, while steam is being generated, receiving and evaluating signals indicative of a degradation of the boiler tubes (15a, 15b) from within the flue gas tract (14).

2. The method according to claim 1, **characterized in that** it comprises receiving the signals by degradation sensors (4) located external to the flue gas tract (14).

3. The method according to claim 1, **characterized in that** it comprises receiving ultrasonic signals by ultrasonic transducers (41a, 41b).

4. The method according to claim 1, **characterized in that** it comprises receiving the signals from a test tube (40) arranged in the flue gas tract (14) and being exposed to the flue gases.

5. The method according to claim 1, **characterized in that** it further comprises relating the monitored degradation to a plant operation mode, and adapting the latter if necessary.

6. A system for monitoring a degradation of steam generator boiler tubes in large combustion facilities, wherein the boiler tubes (15a, 15b) are arranged in a flue gas tract (14) and exposed to flue gases from a combustion process, **characterized in that** the system comprises degradation sensors (4) for receiving and evaluating, while steam is being generated, signals indicative of a degradation of the boiler tubes (15a, 15b) from within the flue gas tract (14).

7. The system according to claim 6, **characterized in that** the degradation sensors (4) are arranged outside of the flue gas tract (14).

8. The system according to claim 6, **characterized in that** the degradation sensors (4) are ultrasonic transducers (41a, 41b).

9. The system according to claim 6, **characterized in that** it comprises a separate test tube (40) arranged in the flue gas tract (14) and being exposed to the flue gases, wherein the degradation sensors receive signals from the test tube (40).

10. The system according to claim 6, **characterized in that** the combustion facility is a waste incineration plant.
